# EUROPÄISCHE PATENTSCHRIFT

(11) **EP 0 996 865 B1**
(45) Veröffentlichungstag und Bekanntmachung des Hinweises auf die Patenterteilung: **08.12.2004**
(21) Anmeldenummer: 99924975.8
(22) Anmeldetag: 12.05.1999
(51) Int. Cl.: G02B 23/24

(54) **ENDOSKOP ZUR INSPEKTION EINES BEOBACHTUNGSRAUMES**
ENDOSCOPE FOR INSPECTING AN OBSERVATION CAVITY
ENDOSCOPE POUR LE CONTROLE D'UN ESPACE D'OBSERVATION

(30) Priorität: 13.05.1998 DE 19821401
(43) Veröffentlichungstag der Anmeldung: 03.05.2000
(73) Patentinhaber: Storz-Endoskop GmbH, 8200 Schaffhausen (CH)
(72) Erfinder: HAAN, Harald, CH-8203 Schaffhausen (CH); KRATTIGER, Beat, CH-8222 Beringen (CH); KUSTER, Manfred, CH-8200 Schaffhausen (CH); NOVAK, Pavel, CH-8207 Schaffhausen (CH); RELING, Jörg, D-78604 Rietheim/Weilheim (DE)
(74) Vertreter: Heuckeroth, Volker, Dr.
(86) Internationale Anmeldenummer: PCT/EP1999/003336
(87) Internationale Veröffentlichungsnummer: WO 1999/059018

(56) Entgegenhaltungen:
- EP-A- 0 558 278
- WO-A-95/24720
- DD-A- 276 540
- DE-A- 2 641 594
- DE-A- 3 421 106
- DE-A- 4 438 229
- DE-B- 1 031 992
- GB-A- 2 127 174
- US-A- 4 730 911
- US-A- 4 840 474

## Beschreibung

Die Erfindung betrifft ein Endoskop zur Inspektion eines Beobachtungsraumes, insbesondere eines Beobachtungsraumes, in dem ein heißes Medium und/oder Infrarot-Strahlung vorhanden ist, mit einem Schaft, in dem ein optisches System angeordnet ist, wobei der Schaft einen Innenschaft und einen diesen beabstandet umgebenden Außenschaft aufweist, wobei das optische System in dem Innenschaft angeordnet ist, und wobei der Schaft im Bereich seines distalen Endes so ausgebildet ist, daß er für elektromagnetische Strahlung im infraroten Spektralbereich im wesentlichen undurchlässig ist.

Ein derartiges Endoskop für technische Anwendungen ist aus der DE 44 38 229 C2 bekannt.

Ein solches Endoskop wird allgemein dazu verwendet, dynamische Prozesse in einem Beobachtungsraum, beispielsweise einer Reaktionskammer oder einem Brennraum, durch ein Okular am proximalen Ende des Endoskops direkt zu beobachten oder mittels einer an das Endoskop angeschlossenen Kamera in eine Bildwiedergabeeinheit zu übertragen und dort darzustellen.

Ein spezieller Anwendungsfall eines derartigen Endoskopes ist die Verbrennungsforschung an Kolbenmotoren in Motorenprüfständen. Mit dem Endoskop kann bei laufendem Motor die Kraftstoffeinspritzung, die Gemischverteilung sowie der Verbrennungsprozeß der Verbrennungsgase dargestellt werden.

Weitere Anwendungsfälle eines derartigen Endoskopes sind die Verbrennungsforschung in Gasturbinen und Düsentriebwerken und an Flammen in Ölfeuerungen, die Beschickungsüberwachung in Öfen, die routinemäßige Überwachung in Feuerungsanlagen und Hochöfen oder die Darstellung von chemischen Reaktionen in Chemiereaktoren.

Den zuvor genannten Anwendungsgebieten ist gemeinsam, daß in dem zu inspizierenden Beobachtungsraum ein heißes Medium und/oder Infrarot-Strahlung vorhanden sein kann, denen das Endoskop während des Betriebs ausgesetzt ist.

Um mit dem Endoskop einen Beobachtungsraum zu inspizieren, wird in eine Wand des Beobachtungsraumes eine Bohrung eingebracht, in die das distale Ende des Endoskopes mit Hilfe eines rohrförmigen, beidseits offenen Einsatzes eingeführt wird. Um auch nicht selbstleuchtende Prozesse beobachten zu können, wird zusätzlich ein Beleuchtungssystem verwendet, das durch eine zweite Bohrung in der Wand des Beobachtungsraumes eingeführt wird.

Während der Inspektion des Beobachtungsraumes ist das in die Öffnung in der Wand des Beobachtungsraumes, beispielsweise eines Motors, eingeführte distale Ende des Endoskopes dem Brennraumklima ausgesetzt. Beispielsweise in Diesel-Motoren herrschen im Betrieb mittlere Brennzyklus-Temperaturen bis ca. 1.800° C. Das in dem Schaft des Endoskopes angeordnete System ist jedoch nur für Betriebstemperaturen im Bereich zwischen maximal 100° C bis 200° C ausgelegt. Die optischen Bauelemente selbst und auch eine am distalen Ende des Endoskopes vorhandene Mechanik würden zwar auch höheren Temperaturen standhalten, nicht jedoch der optische Kitt und die Klebestellen, die für den Zusammenbau und Einbau des optischen Systems in dem Schaft verwendet werden.

Das aus der eingangs genannten DE 44 38 229 C2 bekannte Endoskop zur Beobachtung von unter Druck und/oder hoher Temperatur stehenden Hohlräumen weist eine druckfeste Kapselung des Endoskopes auf, das aus einem Schutzrohr besteht, das das Endoskoprohr umgibt, und das in Höhe des Objektes des Endoskops ein druckfestes Fenster aus Quarzglas aufweist. Das Schutzrohr bildet somit einen Außenschaft, während das Endoskoprohr das optische System aufnimmt.

Um zu verhindern, daß das distale Ende des Endoskopes im Bereich des Objektives mit dem heißen Medium direkt in Berührung kommt, werden solche Endoskope im allgemeinen zusammen mit einem reagenzglasförmigen Schutzglas verwendet, das in die Bohrung in der Wand des Beobachtungsraumes eingesetzt wird, und in das das distale Ende des Endoskopes eingeführt wird. Während das Schutzglas zwar eine Trennung bzw. Isolation des optischen Systemes des Endoskopes von dem in dem Brennraum vorhandenen heißen Medium bewirkt, bietet es jedoch keinen Schutz gegen Infrarot-Strahlung. Es wurde festgestellt, daß bei Verwendung eines Schutzglases in einer Brennraumumgebung mit Brennzyklus-Temperaturen von ca. 1.800° C hinter dem Schutzglas noch Temperaturen im Bereich von 700° C herrschen. Derartig hohe Temperaturen können jedoch zu einer Beschädigung des optischen Systems des Endoskops führen.

Das aus der DE 44 38 229 C2 bekannte Endoskop weist ein solches als Strömungsrohr ausgebildetes Schutzrohr auf, das jedoch an seinem distalen Ende offen ist, und daß mit einem Kühl- und Spülmedium beaufschlagbar ist, wobei das Kühl- und Spülmedium am distalen Ende des Strömungsrohres auf Höhe des distalen Endes des Endoskopschaftes in den Beobachtungsraum austritt.

US 4730911 offenbart ein Endoskop, dessen Optik durch ein IR-reflektierendes Fenster geschützt wird.

Es sind weiterhin Endoskope bekannt, die ein Kühlsystem aufweisen, das eine Zuführung und Rückführung für ein Kühlmedium, beispielsweise ein Gas oder eine Flüssigkeit, aufweist, wobei in dem Schaft des Endoskopes sowohl eine Zuführ- als auch eine Rückführleitung für das Kühlmedium integriert ist. Ein derartiges Kühlsystem beansprucht jedoch einen erheblichen Raum in dem Schaft des Endoskopes, wodurch derartige bekannte Endoskope einen entsprechend großen Schaftquerschnitt aufweisen, der den Einsatz der bekannten Endoskope bei manchen Anwendungen, beispielsweise in modernen Mehrventilmotoren, bei denen aus baulichen Gründen ein geringerer Schaftdurchmesser erforderlich ist, erschwert.

Aus der DE 33 16 167 C2 ist weiterhin ein Periskop zur Beobachtung eines Reaktionsraums eines Hochtemperatur-Reaktors bekannt, mit einer Periskopoptik, die eine dem Reaktionsraum zugekehrte Frontlinse aufweist, an der sich ein konischer Hohlkorper anschließt, dessen kleinere Stirnfläche dem Reaktionsraum zugekehrt ist und eine Blendenöffnung für die Periskopoptik bildet. Die Periskopoptik ist koaxial von einem rohrförmigen wassergekühlten Mantel umgeben, wobei ein zum Reaktionsraum hin offener Zwischenraum, der mit einer Quelle für ein Spülgas, deren Versorgungsdruck höher ist als der Betriebsdruck im Reaktionsraum, gebildet wird. Zwischen dem Mantel und dem konischen Hohlkörper ist ein kegelmantelförmiger Spalt vorhanden. Der Zwischenraum zwischen der Periskopoptik und dem rohrförmigen Mantel dient als Zuführquerschnitt für das Spülgas. Der Zwischenraum ist am distalen Ende offen, so daß das Spülgas in den Reaktionsraum hin austritt. Das offene distale Ende dieses Spülraums ist als Ringdüse ausgebildet, indem auf die Frontlinse der Periskopoptik der konische Hohlkörper aufgesetzt ist, der zusammen mit dem rohrförmigen Mantel am distalen Ende die Ringdüse bildet.

Des weiteren ist aus der DD 276 540 A1 ein Hitzeschutz für ein Endoskop zur Untersuchung von Bauteilen in heißen, geschlossenen Räumen bekannt, wobei eine Verringerung der Wärmebelastung im Bereich der empfindlichen Optik dadurch erreicht wird, daß um das Endoskop eine mit einem Sichtfenster versehene, zur Aufnahme eines gasförmigen Kühlmediums bestimmte, dem Durchmesser des Endoskops angepaßte, auswechselbare Umhüllung angeordnet ist, und daß an die obere Begrenzung der Umhüllung eine Aufnahme- und Verteilungseinrichtung für das Kühlmedium anschließt, und daß das untere Ende der Umhüllung durch einen Stopfen verschlossen ist.

Ferner ist aus der DE-AS 26 41 594 ein Endoskop für die Betrachtung heißer Räume bekannt, das konzentrisch ein mit Abstand zueinander angeordnetes Innen- und Außenrohr aufweist, die beide in den Beobachtungsraum hinein verlaufen, sowie eine ringförmige Deckplatte, die auf dem Ende des Außenrohres innerhalb des Beobachtungsraumes montiert ist und eine Betrachtungsöffnung bildet. Diese ist mit einem Glasfenster ausgestattet, vor dem ein durchsichtiger Glimmer-Schutzschirm angeordnet ist. Um das Innenrohr herum ist ein Wasserkühl-Mantel angeordnet, wobei Mittel zum Umwälzen eines Kühlmittels durch den Mantel vorgesehen sind.

Schließlich ist aus der DE-AS 1 031 992 ein Endoskop zur Beobachtung der Feuerräume und Rauchgaszüge von Dampferzeugern während des Betriebes bekannt, wobei als Wärmeschutz für das Endoskop dieses mit einem Mantel umschlossen ist und durch den Zwischenraum zwischen dem Mantel und dem Endoskop ein Kühlmittel geleitet wird, das am Okular durch eine Reihe konzentrisch um dasselbe angeordnete Öffnungen in Form eines Schutzschleiers austritt.

Bei all den zuvor genannten bekannten Endoskopen beschränken sich die Wärmeschutzmaßnahmen auf eine Kühlung des Schaftes mittels eines gasförmigen oder flüssigen Kühlmediums, das entlang des das optische System aufnehmenden Innenschafts geleitet wird, was jedoch, wenn sich die Wärmeschutzmaßnahmen auf die Kühlung allein beschränken, einen entsprechenden Strömungsquerschnitt für das Kühlmedium oder sogar die verwendung eines zusätzlichen Schutzglases als Leitung für das Kühlmedium erfordert. Dadurch ist der Gesamtquerschnitt der bekannten Endoskope groß, so daß ihre Anwendung in Fällen, bei denen aus baulichen Gründen ein geringerer Schaftdurchmesser erforderlich ist, nur bedingt oder nicht möglich ist.

Der Erfindung liegt daher die Aufgabe zugrunde, ein Endoskop der eingangs genannten Art dahingehend weiterzubilden, daß unabhängig von einer Kühlung ein verbesserter Wärmeschutz des in dem Schaft angeordneten optischen Systems erreicht wird.

Erfindungsgemäß wird diese Aufnahme hinsichtlich des eingangs genannten Endoskopes dadurch gelöst, daß der Außenschaft im Bereich seines distalen Endes zumindest teilweise eine Infrarot-Strahlung reflektierende Beschichtung aufweist.

Die bei dem erfindungsgemäßen Endoskop vorgesehene Wärmeschutzmaßnahme in Form der reflektierenden Beschichtung, die als dünne Schicht ausgebildet sein kann, hat nun den besonderen Vorteil, daß die Infrarot-Strahlung aufgrund ihrer Reflexion an der am Außenschaft vorgesehenen Beschichtung nicht zu einer Absorptionserwärmung des Außenschaftes führt. Mit anderen Worten setzt diese Wärmeschutzmaßnahme ohne das unbedingte Erfordernis der Verwendung eines Schutzglases und einer Außenkühlung bereits am Außenschaft an, und nicht erst im Bereich zwischen dem Innenschaft und dem Außenschaft, wie dies bei den aus dem Stand der Technik bekannten Wärmeschutzmaßnahmen in Form einer Kühlung mittels eines Spülmediums zwischen Innen- und Außenschaft der Fall ist. Die erfindungsgemäße Ausgestaltung des Endoskops hat demgegenüber den Vorteil, daß der Zwischenraum zwischen dem Innenschaft und dem Außenschaft im Querschnitt verkleinert werden kann, und auch ohne Beaufschlagung mit einem Kühlmedium einfach als Luftraum ausgebildet sein kann. Selbstverständlich kann der Zwischenraum zwischen dem Innenschaft und dem Außenschaft zusätzlich mit einem Kühlmedium beaufschlagt werden, wobei dies dann als flankierende Wärmeschutzmaßnahme mit einem geringeren Spülquerschnitt möglich ist. Auch kann als flankierende Maßnahme zusätzlich ein Schutzglas verwendet werden, jedoch ist dies nicht unbedingt erforderlich. Ein weiterer Vorteil der erfindungsgemäß vorgesehenen Wärmeschutzmaßnahme besteht darin, daß eine derartige Beschichtung in Form eines metallischen Überzuges als sehr dünne Schicht aufgedampft werden kann, so daß der Außendurchmesser des Schafts durch die reflektierende Beschichtung nicht merklich vergrößert wird.

Die der Erfindung zugrundeliegende Aufgabe wird somit vollkommen gelöst.

Dabei ist es bevorzugt, wenn die reflektierende Beschichtung so beschaffen ist, daß ihr Reflexionsvermögen auf die Strahlung eines 2.200° C heißen schwarzen Körpers optimiert ist.

Das Emissionsspektrum einer rußenden Flamme entspricht etwa der Strahlung eines 2.200° C heißen schwarzen Körpers mit einem Emissionsmaximum bei einer Wellenlänge von λ = 1.100 nm. Mit einem derartigen Reflexionsvermögen der reflektierenden Beschichtung ist das erfindungsgemäße Endoskop daher besonders vorteilhaft für den Einsatz bei der Untersuchung von Verbrennungsprozessen in Verbrennungsmotoren oder Öfen geeignet.

In einer weiteren bevorzugten Ausgestaltung ist die reflektierende Beschichtung eine Goldschicht.

Diese Maßnahme hat den Vorteil, daß Gold bei der vorgenannten Emissionswellenlänge von λ = 1.100 nm einen Absorptionskoeffizienten von ca. 0,01 aufweist. Andere Metalle haben dagegen einen um mehr als eine Größenordnung größeren Absorptionskoeffizienten. Bei Bestrahlung des mit einer Goldschicht beschichteten Außenschaftes tritt somit vorteilhaft eine nur sehr geringe Erwärmung des Außenschaftes auf, wodurch vermieden wird, daß der Außenschaft als Wärmequelle wirkt und Wärme auf den Innenschaft abstrahlt.

In einer weiteren bevorzugten Ausgestaltung ist am distalen Ende des Schaftes lichteintrittsseitig ein optischer Bandpaßfilter angeordnet, der im sichtbaren Spektralbereich transparent ist und Strahlung im infraroten Spektralbereich zumindest teilweise absorbiert und/oder reflektiert.

Diese Maßnahme hat den Vorteil, daß Licht im sichtbaren Frequenzspektrum, das für die Darstellung des in dem Beobachtungsraum ablaufenden Prozesses benötigt wird, ungehindert in das optische System des Endoskopes eingekoppelt werden kann, wogegen Strahlung im infraroten Spektralbereich nicht in das optische System eintreten kann. Dadurch wird verhindert, daß die schwarze, im Infrarot absorbierende Blende des optischen Systems übermäßig erwärmt wird. Die Absorptionswärme könnte nämlich nur schlecht abgeleitet werden kann, da zwischen Blende und Außenhülle des Objektives ein großer Wärmeübergangswiderstand besteht. Als optischer Bandpaßfilter kann ein handelsüblicher Wärmeschutzfilter verwendet werden, der vor die Frontlinse des Endoskopes geklebt werden kann.

In einer bevorzugten Ausgestaltung ist der optische Bandpaßfilter ein Dünnschicht-Bandpaßfilter.

Der optische Bandpaßfilter kann auch als dünne Schicht auf der Frontlinse aufgebracht sein, die dann das Substrat für den Filter bildet.

Dabei ist es weiterhin bevorzugt, wenn der optische Bandpaßfilter zusätzlich ein Infrarot-Strahlung absorbierendes Substrat aufweist.

Durch diese Maßnahme wird die Wirksamkeit des optischen Bandpaßfilters weiter verbessert, insbesondere wenn die Infrarot-Strahlung reflektierende Beschichtung des Bandpaßfilters so ausgelegt ist, daß sie den kurzwelligen Anteil im nahen Infrarot-Spektrum reflektiert, und der langwellige Teil dann von dem Filtersubstrat des optischen Bandpaßfilters absorbiert wird. Somit kann schädliche Infrarot-Strahlung über einen erheblich größeren spektralen Bereich wirksam herausgefiltert werden. Das Filtersubstrat kann auch durch die Frontlinse des optischen Systems selbst gebildet werden, indem für die Frontlinse ein entsprechend geeignetes Material gewählt wird.

In einer weiteren bevorzugten Ausgestaltung ist ein Lumen zwischen dem Innenschaft und dem Außenschaft als Zuführkanal für ein Kühlmedium vom proximalen Ende zum distalen Ende des Schaftes ausgebildet.

Durch diese Maßnahme kann der Schutz des optischen Systemes vor extrem hohen Temperaturen weiter verbessert werden. Das zwischen dem Innenschaft und dem von diesem beabstandeten Außenschaft vorhandene Lumen bietet die Möglichkeit, einen Zuführkanal mit einem großen Strömungsquerschnitt und damit einem geringeren Strömungswiderstand auszubilden, wodurch eine größere Kühlleistung durch eine verbesserte Konvektion am distalen Ende erreicht wird. Das Kühlmedium kann auch vorteilhaft die Frontlinse und den optischen Bandpaßfilter hinterspülen und dadurch die Optik am distalen Ende des Innenschaftes zusätzlich kühlen.

Dabei ist es bevorzugt, wenn im Bereich des distalen Endes im Außenschaft zumindest eine Austrittsöffnung für das Kühlmedium angeordnet ist.

Diese Maßnahme hat nun den erheblichen Vorteil, daß im Unterschied zu den aus dem Stand der Technik bekannten gekühlten Endoskopen auf einen in dem Schaft integrierten Rückführungskanal verzichtet wird, wodurch das gesamte Lumen zwischen dem Innenschaft und dem Außenschaft als Zuführkanal genutzt werden kann, wodurch wie zuvor erwähnt, die Kühlleistung erhöht werden kann. Bei gleichzeitig höherer Kühlleistung durch die erfindungsgemäße Ausgestaltung des Kühlsystems kann der Querschnitt des Endoskopschaftes sogar verringert werden, so daß das erfindungsgemäße Endoskop insbesondere auch zur Brennraumforschung an modernen Mehrventilmotoren eingesetzt werden kann, bei denen aufgrund baulicher Gegebenheiten aus Platzgründen in dem Zylinderkopf zur Einführung des Endoskopes nur eine Bohrung mit einem geringeren Durchmesser eingebracht werden kann.

In einer weiteren bevorzugten Ausgestaltung ist das Kühlmedium ein Gas, insbesondere Druckluft.

Ein Gas als Kühlmedium hat gegenüber einer Flüssigkeit den Vorteil, daß es, falls es beim Austreten aus dem Außenschaft mit der Atmosphäre des Beobachtungsraumes in Berührung kommt, keinen oder nur geringen störenden Einfluß auf den zu beobachtenden Prozeß hat. Insbesondere Druckluft hat den Vorteil, daß sie komprimiert durch den Zuführkanal gepreßt werden kann. Aufgrund der höheren Dichte der komprimierten Luft ist die Wärmekapazität der Luft erhöht, wodurch eine höhere Kühlleistung erzielt werden kann.

In einer weiteren bevorzugten Ausgestaltung ist um das distale Ende des Schaftes ein distal geschlossenes Schutzglas angeordnet, wobei das Kühlmedium zwischen dem Außenschaft und dem Schutzglas nach proximal abgeführt wird.

Diese Maßnahme hat den Vorteil, daß das aus dem Außenschaft auftretende Kühlmedium nicht in den Beobachtungsraum gelangen kann, wo es den zu beobachtenden Verbrennungsprozeß oder dergleichen stören könnte. Während bei den im Stand der Technik verwendeten Schutzgläsern diese nur zur Isolierung bzw. Trennung des distalen Endes von dem Medium in dem Beobachtungsraum vorgesehen waren, ist nun bei der erfindungsgemäßen Ausgestaltung des Endoskopes vorgesehen, den Raum zwischen dem Schutzglas und dem Außenschaft des Endoskopes als Rückführkanal für das Kühlmedium zu verwenden. Dadurch wird vorteilhafterweise erreicht, daß der Zuführkanal in dem Endoskopschaft mit größerem Strömungsquerschnitt bei sogar verringertem Gesamtquerschnitt des Endoskopschaftes ausgebildet werden kann.

In einer weiteren bevorzugten Ausgestaltung ist die zumindest eine Austrittsöffnung so ausgebildet, daß das Kühlmedium im wesentlichen vom Beobachtungsraum weg gerichtet austritt.

Diese Maßnahme hat den Vorteil, daß dem Kühlmedium bereits beim Austreten aus dem Außenschaft eine Strömungsrichtung vorgegeben wird, die vom Beobachtungsraum weg gerichtet ist, wodurch, wenn beispielsweise kein Schutzglas vorhanden ist, vermieden wird, daß sich das Kühlmedium mit dem Medium in dem Beobachtungsraum vermischt und zu einer den zu beobachtenden Prozeß beeinträchtigenden Abkühlung oder sonstigen Störung führt.

In einer weiteren bevorzugten Ausgestaltung sind zwischen dem Schutzglas und dem Außenschaft Strömungshindernisse angeordnet, die eine Strömung des aus der zumindest einen Austrittsöffnung austretenden Kühlmediums in einen im Gesichtfeldbereich des Endoskops liegenden Bereich des Schutzglases verhindert.

Diese Maßnahme hat den Vorteil, daß das aus dem Außenschaft austretende Kühlmedium nicht eine Abkühlung in des im Gesichtsfeldbereich des Endoskops liegenden distalen Bereich des Schutzglases bewirkt. Eine Abkühlung des im Gesichtfeldbereich des Endoskops liegenden Bereich des Schutzglases hätte nämlich gegebenenfalls zur Folge, daß auf der dem Beobachtungsraum zugewandten Außenseite des Schutzglases Verbrennungsdämpfe in Form von Ruß kondensieren, die den Durchtritt von Licht im sichtbaren Frequenzspektrum beeinträchtigen, was durch die erfindungsgemäß vorgesehenen Strömungshindernisse vermiden wird.

In einer weiteren bevorzugten Ausgestaltung ist die zumindest eine Austrittsöffnung seitlich in dem Außenschaft angeordnet.

Diese Maßnahme hat den Vorteil, daß das Kühlmedium beim Austreten keine oder nur eine geringe Strömungskomponente in Richtung des Beobachtungsraumes oder, wenn um den Schaft ein Schutzglas angeordnet ist, in Richtung des distalen Bereichs des Schutzglases besitzt. Bei Verwendung eines Schutzglases trägt diese Maßnahme daher zur Reduktion der Verrußung des Schutzglases im Bereich des Gesichtsfeldes bei.

In einer weiteren bevorzugten Ausgestaltung sind mehrere Austrittsöffnungen umfänglich verteilt in dem Außenschaft angeordnet.

Diese Maßnahme hat den Vorteil, daß sich die Strömung des Kühlmediums zwischen dem Innenschaft und dem Außenschaft radial symmetrisch um den Innenschaft verteilt und eine gleichmäßige, effektive Kühlung rund um den Innenschaft und damit das optische System bewirkt. Auch dadurch wird einer Verrußung des ggf. verwendeten Schutzglases entgegengewirkt.

In einer weiteren bevorzugten Ausgestaltung ist die zumindest eine Austrittsöffnung so ausgebildet, daß das Kühlmedium beim Austreten entspannt wird.

Diese Maßnahme hat den Vorteil, daß das sich beim Austreten entspannende Kühlmedium aus seiner Umgebung Entspannungswärme aufnimmt, wodurch eine weiter verbesserte Kühlung des distalen Endes des Schaftes erreicht wird. Eine Entspannung des Kühlmediums beim Austreten durch die zumindest eine Austrittsöffnung kann durch eine entsprechende Dimensionierung des Öffnungsquerschnitts bewerkstelligt werden.

In einer weiteren bevorzugten Ausgestaltung ist am proximalen Ende eine Absperrvorrichtung zum Drosseln der Zufuhr des Kühlmediums vorgesehen.

Diese Maßnahme hat den Vorteil, daß über die Absperrvorrichtung die Strömung des Kühlmediums und damit die Kühlleistung den Erfordernissen entsprechend eingestellt werden kann.

Dabei ist es weiterhin bevorzugt, wenn im distalen Bereich des Schaftes temperaturverformbare Elemente, insbesondere Bimetallelemente angeordnet sind, die eine Drosselung der Zufuhr des Kühlmediums bewirken.

Diese Maßnahme hat den Vorteil, daß die Kühlleistung durch Verformung der temperaturverformbaren Elemente automatisch in Abhängigkeit von der Temperatur reguliert werden kann.

In einer weiteren bevorzugten Ausgestaltung ist der Zuführkanal zusätzlich zur Probenentnahme ausgelegt.

Diese Maßnahme hat den Vorteil, daß das Endoskop ohne großen konstruktiven Aufwand auch zur Entnahme von Proben, beispielsweise Verbrennungsdämpfen oder Brennstoffgemischen geeignet ist.

In einer weiteren bevorzugten Ausgestaltung ist der Zuführkanal zusätzlich zur Zuführung von Reagenzien ausgelegt.

Diese Maßnahme hat den Vorteil, daß das Endoskop ebenfalls ohne großen technischen Aufwand dazu benutzt werden kann, Reagenzien in den Beobachtungsraum einzuleiten, um den zu beobachtenden Prozeß gezielt zu beeinflussen.

In bevorzugten Anwendungsfällen wird das erfindungsgemäße Endoskop zur Untersuchung von Verbrennungsvorgängen in Kolbenmotoren, in Ölfeuerungsanlagen, Düsentriebwerken, Gasturbinen oder zur Untersuchung von chemischen Reaktionen in einer Reaktionskammer verwendet.

Weitere Vorteile ergeben sich aus der nachfolgenden Beschreibung der beigefügten Zeichnung.

Es versteht sich, daß die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden hiernach mit Bezug auf die Zeichnung näher beschrieben. Es zeigen:
- Fig. 1: eine Seitenansicht eines Endoskops zur Inspektion eines Beobachtungsraumes in einer Gesamtdarstellung;
- Fig. 2: einen distalen Bereich des Endoskops im Längsschnitt entlang der Linie II-II in Fig. 1 in vergrößertem Maßstab; und
- Fig. 3: ebenfalls den distalen Bereich des Endoskops in einer Fig. 2 entsprechenden Darstellung, wobei zusätzlich um das distale Ende des Schaftes des Endoskops ein Schutzglas angeordnet ist.

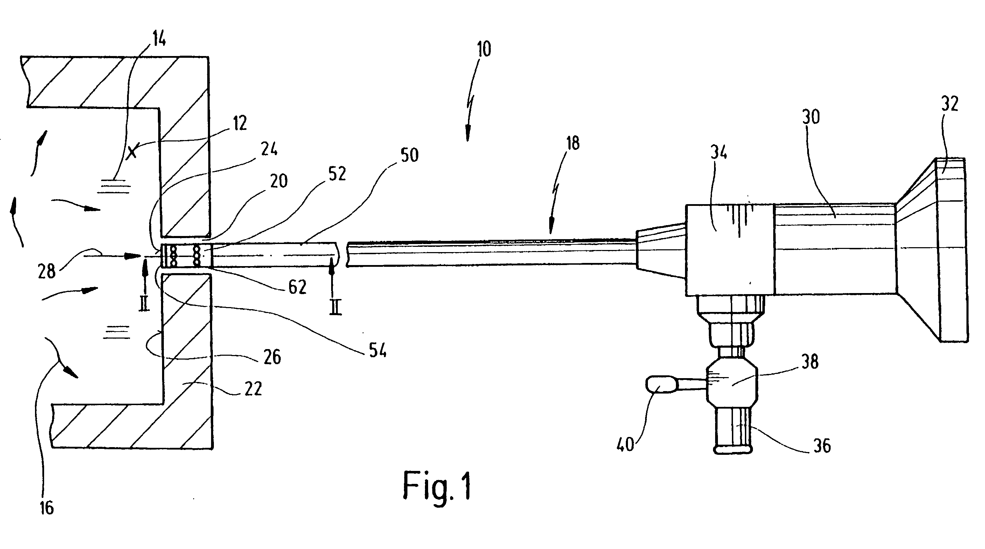

In Fig. 1 ist insgesamt ein mit dem allgemeinen Bezugszeichen 10 versehenes Endoskop zur Inspektion eines Beobachtungsraumes 12 dargestellt. Der Beobachtungsraum 12 ist beispielsweise der Brennraum eines Kolbenmotors.

In dem Beobachtungsraum 12 ist ein heißes Medium 14 vorhanden, im Falle eines Verbrennungsmotors in Form von Verbrennungsgasen, in denen darüber hinaus feinste Rußpartikel enthalten sind.

Ferner ist in dem Beobachtungsraum 12 eine Infrarot-Strahlung 16 vorhanden, die beispielsweise von den als schwarzen Körpern wirkenden Rußpartikeln emittiert wird.

In dem Fall, daß der Beobachtungsraum 12 der Brennraum eines Kolbenmotors ist, herrschen in dem Beobachtungsraum 12 während eines Verbrennungszyklus Temperaturen von etwa 2.000° C.

Das Endoskop 10 weist einen Endoskopschaft 18 auf, dessen distales Ende in eine Bohrung 20 in einer den Beobachtungsraum 12 umgebenden Wand 22 eingesetzt ist. Im Falle, daß der Beobachtungsraum 12 der Brennraum eines Kolbenmotors ist, stellt die Wand 22 das Zylinderkopfgehäuse dar.

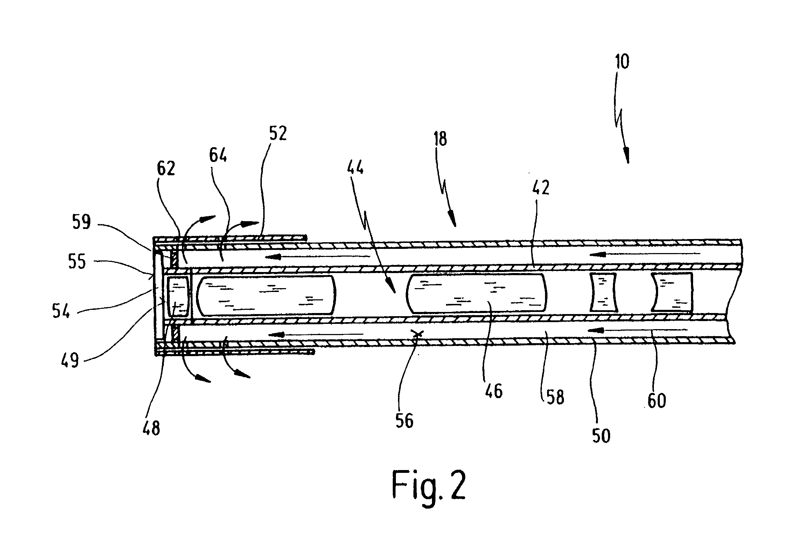

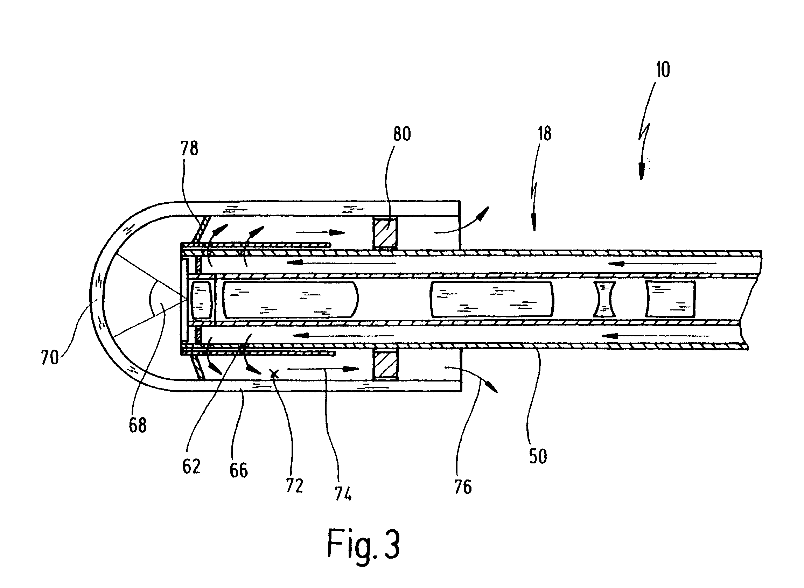

In Fig. 2 und 3 ist die Wand 22 nicht dargestellt.

Zum Einsetzen des distalen Endes des Schaftes 18 in die Bohrung 20 wird ein nicht dargestellter Einsatz verwendet, der in Form eines beidseitig offenen zylindrischen Metallrohres ausgebildet ist, das ein Außengewinde aufweist, das mit einem entsprechenden Innengewinde in der Bohrung 20 verschraubt wird, während der Schaft 18 seinerseits an dem Einsatz fixiert wird.

Im eingesetzten Zustand des Schaftes 18 liegt eine Lichteintrittsfläche 24 des Endoskops 10 etwa in Höhe einer Innenfläche 26 der Wand 22. Durch die Lichteintrittsfläche 24 tritt Licht in das Endoskop 10 aus dem Beobachtungsraum 12 ein, wie mit einem Pfeil 28 angedeutet ist.

Am proximalen Ende des Schaftes 18 weist das Endoskop 10 ein Okular 30 mit einer Okularmuschel 32 auf. Der Beobachtungsraum 12 kann entweder direkt mit dem Auge durch die Okularmuschel 32 beobachtet werden, oder es kann an das Okular 30 eine Kamera, beispielsweise eine CCD-Kamera angeschlossen werden, die dann das aus dem Beobachtungsraum 12 aufgenommene Bild zur Sichtbarmachung in eine Bildwiedergabeeinheit überträgt.

Ferner ist an einem Gehäuseteil 34 des Endoskops 10 ein Anschlußstück 36 zum Anschließen einer nicht dargestellten Kühlleitung angeordnet. Durch das Anschlußstück 36 wird ein Kühlmedium, wie später noch näher beschrieben wird, in den Schaft 18 des Endoskops 10 zugeführt.

Das Anschlußstück 36 ist mit einer Absperrvorrichtung 38 ausgestattet, die einen manuell betätigbaren Hahn 40 aufweist. Durch Betätigen des Hahns 40 zwischen einer maximalen Offenlage und einer maximalen Schließlage der Absperrvorrichtung 38 kann die Zufuhr des Kühlmediums reguliert werden.

Mit Bezug auf Fig. 2 wird nun die Ausgestaltung des Schaftes 18 im Bereich seines distalen Endes näher beschrieben.

Der Schaft 18 weist einen Innenschaft 42 auf, in dem ein optisches System 44, bestehend aus mehreren in Relaisanordnung angeordneten Linsen 46. Das optische System 44 umfaßt ferner am distalen Ende ein Objektiv 48, dessen distale Frontfläche eine Lichteintrittsfläche 49 des optischen Systems 44 bildet. Anstelle eines aus mehreren Stablinsen 46 relaisartig gebildeten optischen Systemes 44 kann dieses auch aus einem geordneten Lichtleitfaserbündel bestehen, das geeignet ist, das durch die Lichteintrittsfläche 24 eintretende Licht nach proximal in das Okular 30 abzubilden.

Der Schaft 18 weist weiterhin einen Außenschaft 50 auf, der den Innenschaft 42 beabstandet umgibt. Der Außenschaft 50 ist in Form eines zylindrischen und konzentrisch zu dem Innenschaft 42 angeordneten Rohres ausgebildet. Der Außenschaft 50 ist mit dem Innenschaft 42 am proximalen Ende des Schaftes 18 fest verbunden, beispielsweise einteilig ausgebildet, kann aber auch von dem Innenschaft 42 abnehmbar, beispielsweise abziehbar, ausgebildet sein.

Im Bereich seines distalen Endes ist der Schaft 18 so ausgebildet, daß er für die Infrarot-Strahlung 16 (vgl. Fig. 1) im wesentlichen undurchlässig ist.

Dazu weist der Außenschaft 50 im Bereich seines distalen Endes zumindest teilweise eine die Infrarot-Strahlung 16 reflektierende Beschichtung 52 auf. Die Beschichtung 52 ist auf der Außenseite des Außenschaftes 50 vorgesehen. Die reflektierende Beschichtung 52 ist dabei so beschaffen, daß ihr Reflexionsvermögen auf die Strahlung eines 2.200° C heißen schwarzen Körpers optimiert ist. In dem vorliegenden Beispiel ist die reflektierende Beschichtung 52 eine Goldschicht.

Am distalen Ende des Schaftes 18 ist lichteintrittsseitig, d.h. vor der Lichteintrittsfläche 49 des optischen Systems 44 weiterhin ein optischer Bandpaßfilter 54 angeordnet, der im sichtbaren Spektralbereich für das gemäß dem Pfeil 28 in Fig. 1 eintretende Licht transparent ist und Strahlung im infraroten Spektralbereich, d.h. die Infrarot-Strahlung 16 zumindest teilweise absorbiert und/oder reflektiert.

Als optischer Bandpaßfilter 54 kann ein handelsüblicher Wärmeschutzfilter verwendet werden, der auf die Frontlinse des Objektivs 48 aufgeklebt wird. Die Filterschicht kann auch direkt auf die Frontlinse aufgebracht werden.

Auf einer Frontfläche 55 des optischen Bandpaßfilters 54, die die Lichteintrittsfläche 24 des Endoskopes 10 bildet, ist eine die Infrarot-Strahlung 16 reflektierende Beschichtung vorgesehen. Das Substrat des Bandpaßfilters 54 kann derart sein, daß es zusätzlich den kurzwelligen Anteil der Infrarot-Strahlung 16 absorbiert, während der Hauptteil der langwelligen Infrarot-Strahlung 16 durch die Filterbeschichtung des optischen Bandpaßfilters 54 reflektiert und absorbiert wird, so daß die Infrarot-Strahlung 16 im gesamten infraroten Spektralbereich nicht in das Objektiv 48 eingekoppelt wird.

Ein Lumen 56 zwischen dem Innenschaft 42 und dem Außenschaft 50, das als zylindrischer Ringraum ausgebildet ist, ist als Zuführkanal 58 für das oben erwähnte Kühlmedium vom proximalen Ende zum distalen Ende des Schaftes 18 ausgebildet. Ein Dichtring 59 am distalen Ende des Schaftes 18 verschließt das Lumen 56.

Als Kühlmedium wird Druckluft verwendet, die durch das Anschlußstück 36 von einer externen nicht dargestellten Druckluftquelle kommend in den Schaft 18 zugeführt wird und das gesamte zylindrische ringförmige Lumen 56 zwischen dem Innenschaft 42 und dem Außenschaft 50 radialsymmetrisch mit Überdruck, d.h. komprimiert, durchströmt. Die Strömung des Kühlmediums, d.h. der Druckluft, ist in Fig. 2 mit Pfeilen 60 veranschaulicht.

Im Bereich des distalen Endes sind in dem Außenschaft 50 mehrere Austrittsöffnungen 62 angeordnet. Die Austrittsöffnungen 62 befinden sich etwa in Höhe des Objektives 48 und sind seitlich in dem Außenschaft 50 in Form von kleinen Bohrungen in dem Außenschaft 50 ausgebildet (vgl. auch Fig. 1). In der reflektierenden Beschichtung 52 auf dem Außenschaft 50 sind entsprechende Öffnungen vorgesehen, aus denen das Kühlmedium entweicht.

Die Austrittsöffnungen 62, die umfänglich verteilt in dem Außenschaft 50 vorgesehen sind, sind derart ausgebildet, daß das aus diesen Austrittsöffnungen 62 austretende Kühlmedium von dem Beobachtungsraum 12 in Fig. 1 weg, d.h. in Richtung proximales Ende des Schaftes 18 austritt. Dies wird durch eine entsprechende Formgebung der Austrittsöffnungen 62 bewerkstelligt, die eine Richtungsänderung der Strömung des Kühlmediums beim Austritt bewirkt. Die Strömung des aus den Austrittsöffnungen 62 austretenden Kühlmediums ist mit Pfeilen 64 angedeutet.

Die Austrittsöffnungen 62 sind weiterhin derart ausgestaltet, daß das unter Druck stehende Kühlmedium, d.h. die komprimierte Druckluft beim Austreten aus den Austrittsöffnungen 62 entspannt wird. Beim Expandieren des aus den Austrittsöffnungen 62 austretenden Kühlmediums nimmt das Kühlmedium aus seiner Umgebung Entspannungswärme auf und bewirkt damit eine zusätzliche Kühlung. Die aufgenommene Wärme wird dann von dem Kühlmedium nach proximal abgeführt. Um den zuvor beschriebenen Entspannungseffekt des Kühlmediums zu bewirken, sind die Austrittsöffnungen 62 mit einem entsprechend klein dimensionierten Öffnungsquerschnitt ausgebildet, so daß in dem Zuführkanal 58 ein höherer Druck herrscht als im Außenbereich des Außenschaftes 50.

Das Kühlmedium umströmt den Innenschaft 42 gleichmäßig radialsymmetrisch und ist daher in der Lage, über den gesamten Unfang des Innenschaftes 42 Wärme abzuführen.

In Fig. 3 ist zusätzlich um das distale Ende des Schaftes 18 des Endoskops 10 ein Schutzglas 66 angeordnet. Das Schutzglas 66 ist distal geschlossen und weist in etwa die Form eines Reagenzglases auf. Das Schutzglas 66 bewirkt eine vollständige Trennung des distalen Endes des Schaftes 18 von dem heißen Medium 14 in dem Beobachtungsraum 12 in Fig. 1.

Das Schutzglas 66 ist zumindest in einem im Gesichtsfeldbereich 68 des Endoskops 10 liegenden Bereich 70 transparent. Das Schutzglas 66 kann beispielsweise aus einem temperaturbeständigen Glas, beispielsweise Quarzglas, bestehen.

Das aus den Austrittsöffnungen 62 aus dem Außenschaft 50 austretende Kühlmedium wird in einem zwischen dem Außenschaft 50 und dem Schutzglas 66 vorhandenen Zwischenraum 72 gemäß Pfeilen 74 nach proximal abgeführt, und tritt am proximalen Ende des Schutzglases 66, das sich im Betriebszustand außerhalb des Beobachtungsraumes 12 befindet, gemäß Pfeilen 76 aus dem Schutzglas 66 aus.

Zwischen dem Schutzglas 66 und dem Außenschaft 50 sind weiterhin Strömunghindernisse 78 angeordnet, die verhindern, daß das aus den Austrittsöffnungen 62 ausströmende Kühlmedium in den im Gesichtsfeldbereich 68 liegenden Bereich 70 des Schutzglases 66 gelangt. Dadurch wird eine Abkühlung des Bereiches 70 und damit eine Kondensation von Verbrennungsdämpfen oder Ruß in diesem Bereich vermieden, die die Sicht durch den Bereich 70 beeinträchtigen könnten.

Die Strömungshindernisse 78 sind derart ausgestaltet, daß sie die Strömung des Kühlmediums in Richtung proximales Ende des Schutzglases 66 umlenken, sofern dies nicht bereits durch die Formgebung der Austrittsöffnungen 62 zumindest teilweise bewerkstelligt wird.

Ferner sind zwischen dem Schutzglas 66 und dem Außenschaft 50 Zentrierelemente 80 vorgesehen, die eine zentrierte Positionierung des distalen Endes des Schaftes 18 in dem Schutzglas 66 ermöglichen.

Während des Betriebes des Endoskopes 10 kann die Zufuhr des Kühlmediums mittels der Absperrvorrichtung 38 bzw. des Hahns 40 reguliert werden, um eine an die Erfordernisse angepaßte Kühlleistung einzustellen.

Ferner kann der Zuführkanal 58 während des Betriebes des Endoskopes auch zur Zuführung von Reagenzien in dem Beobachtungsraum 12 oder zur Entnahme von Proben aus dem Beobachtungsraum 12 genutzt werden, wobei dann am proximalen Ende des Endoskops 10 weitere Anschlüsse für entsprechende Zuführ- und Abführleitungen vorgesehen werden können.

Weiterhin können im distalen Bereich des Schaftes nicht dargestellte temperaturverformbare Elemente, beispielsweise Bimetallelemente, angeordnet sein, die ebenfalls eine Regulierung des Flusses durch den Zuführkanal 58 während des Betriebes automatisch in Abhängigkeit von der Temperatur steuern.

## Patentansprüche

1. Endoskop zur Inspektion eines Beobachtungsraumes, insbesondere eines Beobachtungsraumes (12), in dem ein heißes Medium (14) und/oder Infrarot-Strahlung (16) vorhanden ist, mit einem Schaft (18), in dem ein optisches System (44) angeordnet ist, wobei der Schaft (18) einen Innenschaft (42) und einen diesen beabstandet umgebenden Außenschaft (50) aufweist, wobei das optische System (44) in dem Innenschaft (42) angeordnet ist, und wobei der Schaft (18) im Bereich seines distalen Endes so ausgebildet ist, daß er für elektromagnetische Strahlung im infraroten Spektralbereich im wesentlichen undurchlässig ist, **dadurch gekennzeichnet, daß** der Außenschaft (50) im Bereich seines distalen Endes zumindest teilweise eine Infrarot-Strahlung reflektierende Beschichtung (52) aufweist.

2. Endoskop nach Anspruch 1, **dadurch gekennzeichnet, daß** die reflektierende Beschichtung (52) so beschaffen ist, daß ihr Reflexionsvermögen auf die Strahlung eines 2200° C heißen schwarzen Körpers optimiert ist.

3. Endoskop nach Anspruch 1 oder 2, **dadurch gekennzeichnet, daß** die reflektierende Beschichtung (52) eine Goldschicht ist.

4. Endoskop nach einem der Ansprüche 1 bis 3, **dadurch gekennzeichnet, daß** am distalen Ende des Schaftes (18) lichteintrittsseitig ein optischer Bandpaßfilter (54), vorzugsweise ein Dünnschicht-Bandpaßfilter (54), angeordnet ist, der im sichtbaren Spektralbereich transparent ist und Strahlung im infraroten Spektralbereich zumindest teilweise absorbiert und/oder reflektiert.

5. Endoskop nach Anspruch 4, **dadurch gekennzeichnet, daß** der optische Bandpaßfilter (54) zusätzlich ein Infrarot-Strahlung absorbierendes Substrat aufweist.

6. Endoskop nach einem der Ansprüche 1 bis 5, **dadurch gekennzeichnet, daß** ein Lumen (56) zwischen dem Innenschaft (42) und dem Außenschaft (50) als Zuführkanal (58) für ein Kühlmedium vom proximalen Ende zum distalen Ende des Schaftes (18) ausgebildet ist.

7. Endoskop nach Anspruch 6, **dadurch gekennzeichnet, daß** im Bereich des distalen Endes im Außenschaft (50) zumindest eine Austrittsöffnung (62) für das Kühlmedium angeordnet ist.

8. Endoskop nach Anspruch 6 oder 7, **dadurch gekennzeichnet, daß** das Kühlmedium ein Gas, insbesondere Druckluft ist.

9. Endoskop nach einem der Ansprüche 6 bis 8, **dadurch gekennzeichnet, daß** um das distale Ende des Schaftes (18) ein distal geschlossenes Schutzglas (66) angeordnet ist, wobei das Kühlmedium zwischen dem Außenschaft (50) und dem Schutzglas (66) nach proximal abgeführt wird.

10. Endoskop nach einem der Ansprüche 7 bis 9, **dadurch gekennzeichnet, daß** die zumindest eine Austrittsöffnung (62) so ausgebildet ist, daß das Kühlmedium im wesentlichen vom Beobachtungsraum (12) weg gerichtet austritt.

11. Endoskop nach Anspruch 9 oder 10, **dadurch gekennzeichnet, daß** zwischen dem Schutzglas (66) und dem Außenschaft (50) Strömungshindernisse (78) angeordnet sind, die eine Strömung des aus der zumindest einen Austrittsöffnung austretenden Kühlmediums in einen im Gesichtsfeldbereich (68) des Endoskops (10) liegenden Bereich (70) des Schutzglases (66) verhindert.

12. Endoskop nach einem der Ansprüche 7 bis 11, **dadurch gekennzeichnet, daß** die zumindest eine Austrittsöffnung (62) seitlich in dem Außenschaft (50) angeordnet ist.

13. Endoskop nach einem der Ansprüche 7 bis 12, **dadurch gekennzeichnet, daß** mehrere Austrittsöffnungen (62) umfänglich verteilt in dem Außenschaft (50) angeordnet sind.

14. Endoskop nach einem der Ansprüche 7 bis 13, **dadurch gekennzeichnet, daß** die zumindest eine Austrittsöffnung (62) so ausgebildet ist, daß das Kühlmedium beim Austreten entspannt wird.

15. Endoskop nach einem der Ansprüche 6 bis 14, **dadurch gekennzeichnet, daß** am proximalen Ende eine Absperrvorrichtung (38) zum Drosseln der Zufuhr des Kühlmediums vorgesehen ist.

16. Endoskop nach Anspruch 15, **dadurch gekennzeichnet, daß** im distalen Bereich des Schaftes (18) temperaturverformbare Elemente, insbesondere Bimetallelemente, angeordnet sind, die eine Drosselung der Zufuhr des Kühlmediums bewirken.

17. Endoskop nach einem der Ansprüche 6 bis 16, **dadurch gekennzeichnet, daß** der Zuführkanal (58) zusätzlich zur Probenentnahme ausgelegt ist.

18. Endoskop nach einem der Ansprüche 6 bis 17, **dadurch gekennzeichnet, daß** der Zuführkanal (58) zusätzlich zur Zuführung von Reagezien ausgelegt ist.

19. Verwendung eines Endoskops nach einem der Ansprüche 1 bis 18 zur Untersuchung von Verbrennungsvorgängen in Kolbenmotoren.

20. Verwendung eines Endoskops nach einem der Ansprüche 1 bis 18 zur Untersuchung von Verbrennugsvorgängen in Feuerungsanlagen.

21. Verwendung eines Endoskops nach einem der Ansprüche 1 bis 18 zur Untersuchung von chemischen Reaktionen in einer Reaktionskammer.

22. Verwendung eines Endoskops nach einem der Ansprüche 1 bis 18 zur Untersuchung von Verbrennungsvorgängen in Gasturbinen.

## Claims

1. An endoscope for inspection of an observation space, in particular of an observation space (12) in which a hot medium (14) and/or infrared radiation (16) is present, comprising a shaft (18) in which an optical system (44) is arranged, the shaft (18) having an inner shaft (42) and an outer shaft (50) surrounding the latter at a distance, the optical system (44) being arranged in the inner shaft (42), and the shaft (18) being configured in the region of its distal end in such a way that it is substantially opaque to electromagnetic radiation in the infrared spectral region, **characterized in that** the outer shaft (50) at least partially has, in the region of its distal end, a coating (52) that reflects infrared radiation.

2. The endoscope of Claim 1, **characterized in that** the reflective coating (52) is constituted such that its reflective capability is optimized for the radiation of a black body at a temperature of 2200°C.

3. The endoscope of Claim 1 or 2, **characterized in that** the reflective coating (52) is a gold layer.

4. The endoscope of any one of Claims 1 through 3, **characterized in that** there is arranged at the distal end of the shaft (18), on the light layer side, an optical bandpass filter (54), preferably a thin-layer bandpass filter (54), that is transparent in the visible spectral region and that at least partially absorbs and/or reflects radiation in the infrared spectral region.

5. The endoscope of Claim 4, **characterized in that** the optical bandpass filter (54) additionally has a substrate that absorbs infrared radiation.

6. The endoscope of any one of Claims 1 through 5, **characterized in that** a lumen (56) is constituted between the inner shaft (42) and outer shaft (50) as a delivery conduit (58) for a cooling medium from the proximal end to the distal end of the shaft (18).

7. The endoscope of Claim 6, **characterized in that** at least one outlet opening (62) for the cooling medium is arranged in the outer shaft (50) in the region of the distal end.

8. The endoscope of Claim 6 or 7, **characterized in that** the cooling medium is a gas, in particular compressed air.

9. The endoscope one any one of Claims 6 through 8, **characterized in that** a distally closed glass shield (66) is arranged around the distal end of the shaft (18), the cooling medium being discharged in the proximal direction between the outer shaft (50) and the glass shield (66).

10. The endoscope of any one of Claims 7 through 9, **characterized in that** the at least one outlet opening (62) is configured such that the cooling medium emerges in a manner directed substantially away from the observation space (12).

11. The endoscope of Claim 9 or 10, **characterized in that** flow obstacles (78), which prevent the cooling medium emerging from the at least one outlet opening from flowing into a region (70) of the glass shield (66) located in the viewing field region (68) of the endoscope (10), are arranged between the glass shield (66) and the outer shaft (50).

12. The endoscope of any one of Claims 7 through 11, **characterized in that** the at least one outlet opening (62) is arranged laterally in the outer shaft (50).

13. The endoscope of any one of Claims 7 through 12, **characterized in that** several outlet openings (62) are arranged in circumferentially distributed fashion in the outer shaft (50).

14. The endoscope of any one of Claims 7 through 13, **characterized in that** the at least one outlet opening (62) is configured such that the cooling medium is depressurized upon emergence.

15. The endoscope of any one of Claims 6 through 14, **characterized in that** a shutoff apparatus (38) for throttling the delivery of cooling medium is provided at the proximal end.

16. The endoscope of Claim 15, **characterized in that** temperature-deformable elements, in particular bimetallic elements, which effect throttling of the delivery of cooling medium are arranged in the distal region of the shaft (18).

17. The endoscope of any one of Claims 6 through 16, **characterized in that** the delivery conduit (58) is additionally designed for taking samples.

18. The endoscope of any one of Claims 6 through 17, **characterized in that** the delivery conduit (58) is additionally designed for the delivery of reagents.

19. Use of an endoscope of any one of Claims 1 through 18 for the investigation of combustion processes in piston engines.

20. Use of an endoscope of any one of Claims 1 through 18 for the investigation of combustion processes in furnaces.

21. Use of an endoscope of any one of Claims 1 through 18 for the investigation of chemical reactions in a reaction chamber.

22. Use of an endoscope of any one of Claims 1 through 18 for the investigation of combustion processes in gas turbines.

## Revendications

1. Endoscope pour le contrôle d'un espace d'observation, en particulier d'un espace d'observation (12), dans lequel il y a un fluide chaud (14) et/ou un rayonnement infrarouge (16), avec une tige (18) dans laquelle est disposé un système optique (44), sachant que la tige (18) comporte une tige intérieure (42) et une tige extérieure (50) qui entoure celle-ci à distance, sachant que le système optique (44) est disposé dans la tige intérieure (42), et sachant que la tige (18) est configurée dans la zone de son extrémité distale de telle sorte qu'elle est essentiellement opaque au rayonnement électromagnétique dans le domaine spectral de l'infrarouge, **caractérisé en ce que** la tige extérieure (50), dans la zone de son extrémité distale, comporte au moins en partie un enduit réfléchissant le rayonnement infrarouge (52).

2. Endoscope selon la revendication 1, **caractérisé en ce que** l'enduit réfléchissant (52) est constitué de telle sorte que son pouvoir réfléchissant est optimisé en fonction du rayonnement d'un corps noir à la température de 2200 °C.

3. Endoscope selon la revendication 1 ou 2, **caractérisé en ce que** l'enduit réfléchissant (52) est une couche d'or.

4. Endoscope selon l'une quelconque des revendications 1 à 3, **caractérisé en ce qu'**à l'extrémité distale de la tige (18), côté entrée de la lumière, est disposé un filtre optique passe-bande (54), de préférence un filtre optique passe-bande (54) en couche fine, qui est transparent dans le domaine visible du spectre et qui absorbe et/ou réfléchit au moins en partie le rayonnement dans le domaine spectral infrarouge.

5. Endoscope selon la revendication 4, **caractérisé en ce que** le filtre optique passe-bande (54) comprend en plus un substrat absorbant le rayonnement infrarouge.

6. Endoscope selon l'une quelconque des revendications 1 à 5, **caractérisé en ce qu'**un espace (56) est formé entre la tige intérieure (42) et la tige extérieure (50), de l'extrémité proximale à l'extrémité distale de la tige (18), comme canal d'amenée (58) pour un fluide de refroidissement.

7. Endoscope selon la revendication 6, **caractérisé en ce que**, dans le domaine de l'extrémité distale dans la tige extérieure (50), une ouverture de sortie (62) au moins est disposée pour le fluide de refroidissement.

8. Endoscope selon la revendication 6 ou 7, **caractérisé en ce que** le fluide de refroidissement est un gaz, en particulier de l'air comprimé.

9. Endoscope selon l'une quelconque des revendications 6 à 8, **caractérisé en ce qu'**autour de l'extrémité distale de la tige (18) est disposé un verre de protection (66) fermé côté distal, sachant que le fluide de refroidissement est évacué vers le côté proximal entre la tige extérieure (50) et le verre de protection (66).

10. Endoscope selon l'une quelconque des revendications 7 à 9, **caractérisé en ce que** la (au moins une) ouverture de sortie (62) est configurée de telle sorte que le fluide de refroidissement sort essentiellement dans la direction détournée de l'espace d'observation (12).

11. Endoscope selon la revendication 9 ou 10, **caractérisé en ce qu'**entre le verre de protection (66) et la tige extérieure (50) sont disposées des chicanes (78) qui empêchent un écoulement du fluide de refroidissement, sortant de la (au moins une) ouverture de sortie, dans une zone (70) du verre de protection (66) située dans la zone du champ de vision (68) de l'endoscope (10).

12. Endoscope selon l'une quelconque des revendications 7 à 11, **caractérisé en ce que** la (au moins une) ouverture de sortie (62) est disposée latéralement dans la tige extérieure (50).

13. Endoscope selon l'une quelconque des revendications 7 à 12, **caractérisé en ce que** plusieurs ouvertures de sortie (62) sont disposées dans la tige extérieure (50), distribuées sur le pourtour.

14. Endoscope selon l'une quelconque des revendications 7 à 13, **caractérisé en ce que** la (au moins une) ouverture de sortie (62) est configurée de telle sorte que le fluide de refroidissement est détendu lors de la sortie.

15. Endoscope selon l'une quelconque des revendications 6 à 14, **caractérisé en ce qu'**à l'extrémité proximale, un dispositif d'obturation (38) est prévu pour l'étranglement de l'arrivée du fluide de refroidissement.

16. Endoscope selon la revendication 15, **caractérisé en ce que** dans la zone distale de la tige (18), des éléments déformables sous l'effet de la température, en particulier des bimétaux, sont disposés, qui provoquent un étranglement de l'arrivée du fluide de refroidissement.

17. Endoscope selon l'une quelconque des revendications 6 à 16, **caractérisé en ce que** le canal d'amenée (58) est conçu en plus pour des prélèvements d'échantillons.

18. Endoscope selon l'une quelconque des revendications 6 à 17, **caractérisé en ce que** le canal d'amenée (58) est conçu en plus pour l'amenée de réactifs.

19. Utilisation d'un endoscope selon l'une quelconque des revendications 1 à 18 pour l'étude de processus de combustion dans des moteurs à pistons.

20. Utilisation d'un endoscope selon l'une quelconque des revendications 1 à 18 pour l'étude de processus de combustion dans des installations de chauffe.

21. Utilisation d'un endoscope selon l'une quelconque des revendications 1 à 18 pour l'étude de processus de réactions chimiques dans une chambre de réaction.

22. Utilisation d'un endoscope selon l'une quelconque des revendications 1 à 18 pour l'étude de processus de combustion dans des turbines à gaz.
